# EUROPEAN PATENT SPECIFICATION

(11) **EP 0 383 439 B1**
(45) Date of publication and mention of the grant of the patent: **03.04.1996**
(21) Application number: 90300670.8
(22) Date of filing: 23.01.1990
(51) Int. Cl.: A47J 31/00, A47J 31/10, H05B 6/64

(54) **Microwave drip coffee maker**
Kaffeemaschine zur Herstellung von Kaffee in Tropfenform mit Mikrowellen
Appareil pour la préparation de café goutte à goutte par micro-ondes

(30) Priority: 13.02.1989 US 310451; 13.02.1989 US 310447; 28.08.1989 US 399736
(43) Date of publication of application: 22.08.1990
(73) Proprietor: FARBERWARE INC., Bronx, New York 10461 (US)
(72) Inventor: Belinkoff, Irving, Bellerose Manor New York 11427 (US); Waligorski, Gordon, Delphi Indiana 46923 (US)
(74) Representative: Thomson, Roger Bruce

(56) References cited:
- DE-A- 2 600 018
- DE-A- 2 628 735
- FR-A- 747 411
- FR-A- 2 500 288
- US-A- 2 601 067
- US-A- 3 570 390
- US-A- 4 104 957
- US-A- 4 381 696
- US-A- 4 642 443

## Description

### Brief Description of the Invention

The present invention relates to a brewing apparatus which makes coffee, tea or other brewed drinks by the drip method within a microwave oven. The brewing apparatus retains a quantity of water within a reservoir. The water is heated by microwave energy. The heating of the water activates a pumping system that transfers the water from the reservoir into a basket containing the brewing material. The flow of heated water onto the brewing material brews the coffee, tea or the like.

### Background of the Invention

Previous apparatus to make "microwave coffee" either use the percolation method (U.S. Pat. No. 4,642,443) or control the deposit of heated water onto the brewing material by a temperature sensitive valve (U.S. Pat. Nos. 4,104,957; 4,381,696; and 4,132,039). The valve in these type microwave coffee makers is adapted to open at a predetermined temperature of the water retained in a reservoir. Upon opening of the valve, the entire quantity of water retained in the reservoir is deposited onto the coffee grounds.

Previous coffee brewing apparatus, which do not operate in conjunction with a microwave oven, have been known to brew coffee using a water transfer method that relies on a pressure increase created within a sealed vessel during the water heating process (U.S. Pat. No. 4,200,039).

FR-A-747411 describes an electric cafetière which operates by siphonic action to transfer water from a reservoir to a filter on which ground coffee for example is placed. The filter is positioned above a collecting jug.

US-A-2601067 describes an apparatus for brewing coffee using microwave energy and based upon a two-container vacuum-type device.

FR-A-2500288 describes a microwave-based method of brewing coffee, in which water is heated in an upper reservoir and passes down through coffee grounds on a filter, into a lower collecting vessel.

In accordance with the invention there is provided a beverage brewing apparatus for use within a microwave oven, comprising a reservoir for retaining a quantity of water to be heated, means for retaining a quantity of material from which the beverage is to be brewed, a container for receiving the brewed beverage, and water transfer means having an inlet end within the reservoir and an outlet end, said material retaining means being located below the outlet end of the water transfer means to receive heated water therefrom,
characterised in that the reservoir is transparent to microwave energy whereby water in the reservoir can be heated, and in that the transfer means functions, in response to the application of microwave energy to the water, to pump water by pressure increase from the reservoir to the outlet end and/or to create a hydraulic head advantage between the reservoir and the outlet end of the transfer means.

The present invention brews coffee according to the following preferred method. The reservoir is filled with the quantity of water intended to be brewed into coffee. A corresponding amount of coffee grounds or other brewing material is placed within the retaining means, e.g. a basket. The reservoir and basket are placed on top of the container, e.g. a carafe, and supported thereby. The assembled apparatus is inserted into the cavity of the microwave oven and exposed to the microwave energy. The microwave energy initiates the brewing cycle by heating the water. The elevation of the water temperature activates the pumping system that forces water to rise in the inlet leg of the transfer tube toward the outlet. Upon filing the inlet leg, water flows over the bight and into the coffee basket. The heated water partially dissolves the coffee grounds and brews coffee. The brewed coffee passes through the basket and is collected within the carafe at the base of the apparatus. The apparatus is removed from the microwave oven upon transfer of substantially all the water from the reservoir. The reservoir and basket are removed from the top of the carafe and coffee is served. Other features of the invention will become apparent by describing preferred embodiments thereof.

### Brief Description of the Drawings

For purposes of illustrating the invention, there is shown in the drawings forms which are presently preferred; it being understood, however, that this invention is not limited to the precise arrangements and instrumentalities shown.

Figure 1 shows a first embodiment of the invention retained within the cavity of a typical microwave oven.

Figure 2 is a side cross-sectional view of the first embodiment of the invention.

Figure 3 is a top cross-sectional view thereof taken along line 3-3 in Figure 2.

Figure 4 is a variation of the spreader plate portion of the invention.

Figure 5 is a second variation of the spreader plate portion of the invention.

Figure 6 is a cross-sectional view of the spreader plate shown in Figure 5 as taken along line 6-6.

Figure 7 shows a cross-sectional view of a second embodiment of the present invention.

Figure 8 is an alternate version of the second embodiment of the present invention.

Figure 9 is another alternate version of the second embodiment of the present invention.

Figure 10 is a schematic representation of the change in pressure within one version of the second embodiment of the present invention as compared to the water temperature and total flow.

### Detailed Description of the Drawings

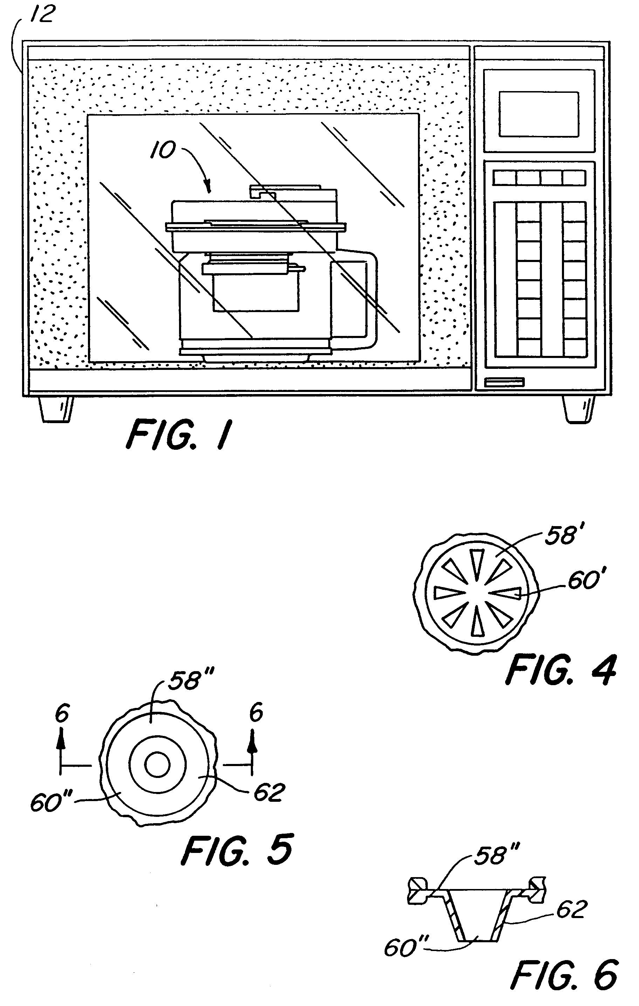

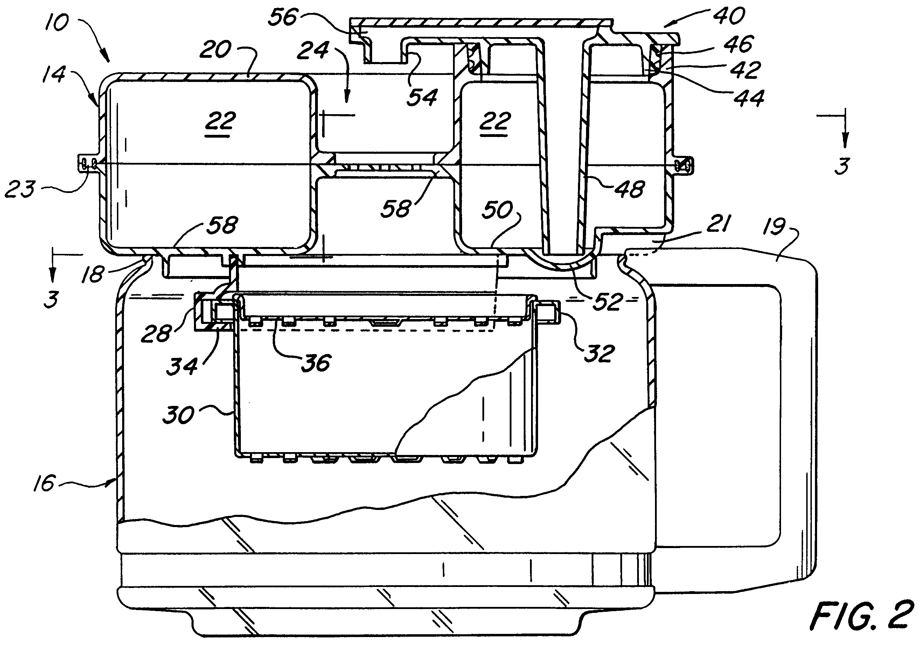

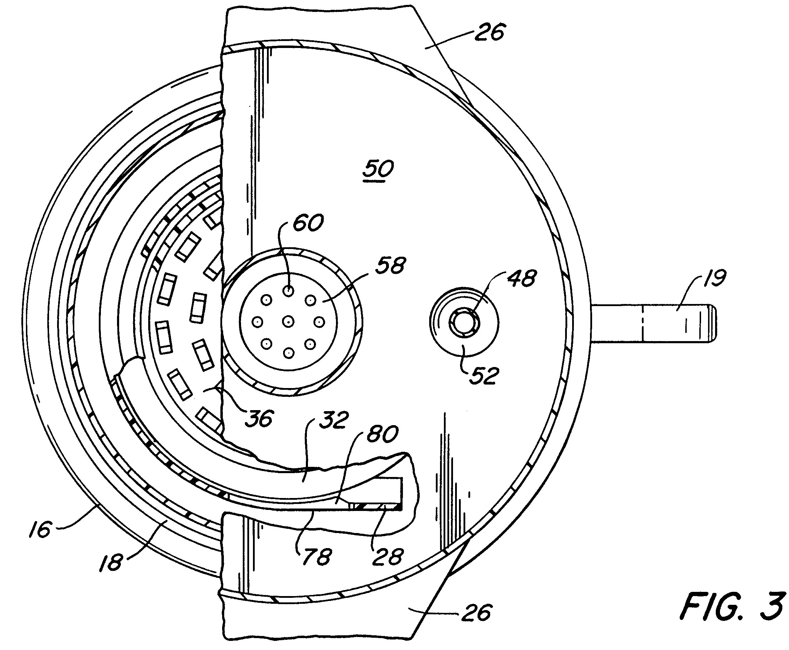

In the figures where like numerals indicate like elements there is shown the coffee brewing apparatus 10 of the type preferred by the present invention. Figure 1 illustrates the apparatus positioned within the cavity of a microwave oven 12. The microwave oven 12 is contemplated to be of any type available on the market. However, a microwave oven of at least 500 watts is preferred. Lower wattage units may drastically effect the time to sufficiently heat the water for brewing, and thus extend the brewing cycle.

As particularly illustrated in Figures 2 and 3, the apparatus 10 generally comprises a reservoir portion 14 which is adapted to be positioned on and supported by a vessel, such as a carafe 16. The reservoir 14, as shown, is supported on the upper rim 18 of the carafe 16 with portions extending into the carafe 16. The carafe 16 is generally contemplated to be made of a microwave pervious or transparent material. The carafe 16 may be translucent or transparent so that the brewed coffee may be viewed through the side walls thereof.

The carafe 16 includes a handle 19 which is attached to the side walls thereof. The handle 19 may be attached to the carafe 16 in any manner desired. However, if the handle 19 is attached by use of a metal band or includes metal portions, the method of attachment must contemplate the fact that adjacent metal surfaces may cause arcing within the oven when exposed to microwave energy. The top portion of the handle 19 may also be attached to the carafe 16 adjacent to the upper rim 18 thereof by hooking over the rim 18. As illustrated, a cavity 21 is provided adjacent the bottom surface of the reservoir 14 so as to permit the reservoir 14 to be seated on the rim 18 while remaining level. The cavity 21 provides clearance for the attachment of the handle 19 to the rim 18.

The reservoir 14 preferably includes a tubular or donut shaped body portion 20 defining an enclosed tubular cavity 22. A central opening or passageway 24 is provided through the middle of the body 20. Attached to the body 20 are handles 26 positioned at any convenient location on the side walls thereof for lifting the reservoir 14 off of the carafe 16 when the brewed coffee is to be poured therefrom. The handles 26 may be molded as part of the body 20 or may be attached to the side walls by a solvent or ultrasonic welding.

Attached to the bottom surface of body 20 is a shelf 28 generally having a U-shape. The shelf 28 is adapted to support the basket 30 from the bottom surface of the body 20. The basket 30 includes an outwardly projecting rim 32 which rests on the inwardly projecting surfaces 34 of shelf 28. The coffee basket 30 is slid onto shelf 28 and is positioned substantially in alignment with opening 24. Spring fingers 78, which are cantilevered flexible portions within the walls of the shelf 28, are provided adjacent surface 34 at the ends of the U-shape. The spring fingers 78 may include inwardly projecting tabs 80 that retain the basket 30 and lid 36 within the U-shaped shelf 28 during movement of the reservoir 14.

The reservoir portion 14 may be formed by any convenient method as desired, including blow molding of the entire structure or by the joinder of an upper and lower portion by means of ultrasonic welding. As shown in Figure 2, the reservoir 14 is formed from an upper and lower portion having a projecting rim 23 around the entire periphery of the body 20. The rim 23 is formed from vibration welded joints having a male and female portion which seal the side walls of cavity 22.

The reservoir 14 and its constituent parts are preferably made of a microwave transparent material, such as polycarbonate. Other microwave transparent materials, such as polypropylene, may also be used. The reservoir 14 is contemplated to be positioned close to the magnetron outlet (not shown) of the microwave oven 12. Therefore, the reservoir material will be subjected to a relatively high rate of microwave energy. This positioning of the reservoir 14 will heat the water therein at a relatively fast rate, reducing brewing time. The more durable material under these conditions is the polycarbonate and, therefore, such is preferred.

The coffee basket 30 may be made of metal, such as stainless steel, or other microwave impermeable material. The basket 30 includes a lid 36 which rests on the inside or top surface of rim 32. The lid 32 may also be made of metal, but is preferably made of a non-metallic material if basket 30 is metal. This is due to the restriction on the use of adjacent metal surfaces within the microwave oven, which may cause arcing. The coffee basket 30 may also be made of a microwave permeable material, the same as that used for the reservoir 12. Although the coffee grounds would normally be heated by the microwave energy within such a basket, it has been determined that the brewing water will act as a microwave shield during the brewing cycle. This is due to the fact that microwave energy acts on water, vegetable and mineral in that order. The water from the reservoir will be directed onto the coffee grounds and shield the grounds. Further, the mass of the water in the reservoir 12 will absorb the microwaves directed at the top of the apparatus 10 until the water has been transferred through the brewing cycle. A screen or perforated well (not shown) may also be used, if desired, for the coffee basket.

On the top of body 20 is provided an opening 38. Inserted within the opening is a transfer tube 40. The opening may include a projecting rim 42. Transfer tube 40 includes a mating surface 44 which engages rim 42. A gasket 46 is positioned on surface 44 to seal the cavity 22 and retain the transfer tube 40 within the opening during brewing. Transfer tube 40 includes an inlet tube 48 which extends into cavity 22. The bore of tube 48 may vary depending on the desired flow rate. Inlet tube 48 communicates with an outlet tube 54 through passageway 56. Outlet tube 54 is positioned directly above the opening 24 through the center of the body portion 20. The conduit formed by the transfer tube 40, via the inlet tube 48, passageway 56 and outlet tube 54, is not required to be sealed with respect to the ambient air. Inlet tube 48 preferably extends to a position closely adjacent the internal bottom surface 50 of the reservoir body 20. Within the cavity 22 is provided a well 52 which extends slightly below the bottom surface 50 such that the inlet 48 for transfer tube 40 maybe located at a level below bottom surface 50. Thus, the inlet 48 will be below the water line in the reservoir 14 until substantially all of the fluid is removed from the cavity 22. The bottom surface 50 may also be drafted so as to angle towards the well 52.

The outlet 54 of transfer tube 48 is preferably positioned above a spreader plate 58 within opening 24. Fluid flow passing through the outlet 54 will be deposited onto the spreader 58. This flow will be restricted by the spreader 58 prior to being deposited onto the lid 36 of the basket 30. As shown in Figure 3, the spreader plate 58 includes a series of circular openings 60 that restrict the flow of water onto lid 36. Variations of spreader 58 are illustrated in Figures 4, 5 and 6. Figure 4 generally shows a spreader 58′ having triangular shaped slots 60′ extending radially about the center. This spreader variation is generally contemplated for use in making tea by placing tea leaves in the basket 30. The variation of the spreader plate 58˝ shown in Figures 5 and 6 includes a single opening 60˝ having a generally tapered surface 62 extending downwardly towards the coffee basket 30. As shown, the spreader plates are formed as part of the body portion 20. However, it is contemplated that the spreader plate may form an interchangeable insert for placement within opening 24 in the reservoir body 20.

The lid 36 may also include means for restricting the water flow to the coffee grounds within the basket 30. The surface of the lid 36 is preferably the same as that on the bottom surface of the basket 30. This surface is generally contemplated to retain water on the grounds within the basket without the grounds passing through the openings. However, other surface configurations or a basket using a filter is also contemplated by the present invention.

The operation of this first embodiment is generally contemplated to be as follows. First, the transfer tube 40 is removed from the opening within reservoir 14. Water is poured into cavity 22. The transfer tube 40 is replaced within the opening, with the gasket 46 forming a seal between surface 44 and the projecting rim 42. The inlet 48 of the transfer tube 40 extends below the water line within the cavity 22. The end of inlet 48 is positioned closely adjacent the bottom surface 50 of the reservoir 14 and preferably within well 52. Coffee grounds are placed within the basket 30. The lid 38 is placed over the grounds. The basket 30 is then slid onto the shelf 34, retained by spring fingers 78 and thereby supported below the body 20. The reservoir 14 is then placed on top of the carafe 16 such that the basket 30 is positioned within the interior of the carafe 16. The reservoir 14 rests on the upper rim 18. The apparatus 10 is then placed into the cavity of the microwave oven 12 with the oven being set for operation.

Upon exposure of the microwave energy to the apparatus 10, the water within the cavity 22 is heated. The heating of the water increases the pressure within the cavity 22. This increase in pressure causes water to be forced upwardly through the inlet tube 48. The water is expelled from the channel 56 through outlet tube 54. Outlet tube 54 directs the heated water onto the spreader plate 58. The water passes through the openings 60 in the spreader 58, onto the lid 36 and then onto the coffee grounds within the basket 30. As the coffee grounds are exposed to the heated water, the grounds partially dissolve and coffee is brewed. The brewed coffee then passes through the bottom of the basket 30 and into the carafe 16. It is preferred that the carafe 16 be sized such that the level of the brewed coffee fills only to a position below the bottom surface of the coffee basket 30.

In this first embodiment, the change in pressure caused by the heating of the water within the sealed cavity 22 of the reservoir 14 is contemplated to fluctuate cyclically over the heating cycle due to the disbursement of water through the outlet tube 54 and the associated reduction in water mass within the cavity 22. The pumping system for the water through the transfer tube 40 is contemplated to provide a periodic flow onto the coffee grounds sufficient to transfer nearly all of the water from the cavity 22.

The donut or tubular shaped reservoir body 20 is designed to increase the surface area of exposure of the microwave energy so as to maximize the heating of the water. It is also contemplated that the apparatus of the present invention may be pressurized such that the brewing process would be capable of preparing Espresso. Such would be accomplished by sealing the outlet tube 54 with respect to passageway 24 within body portion.

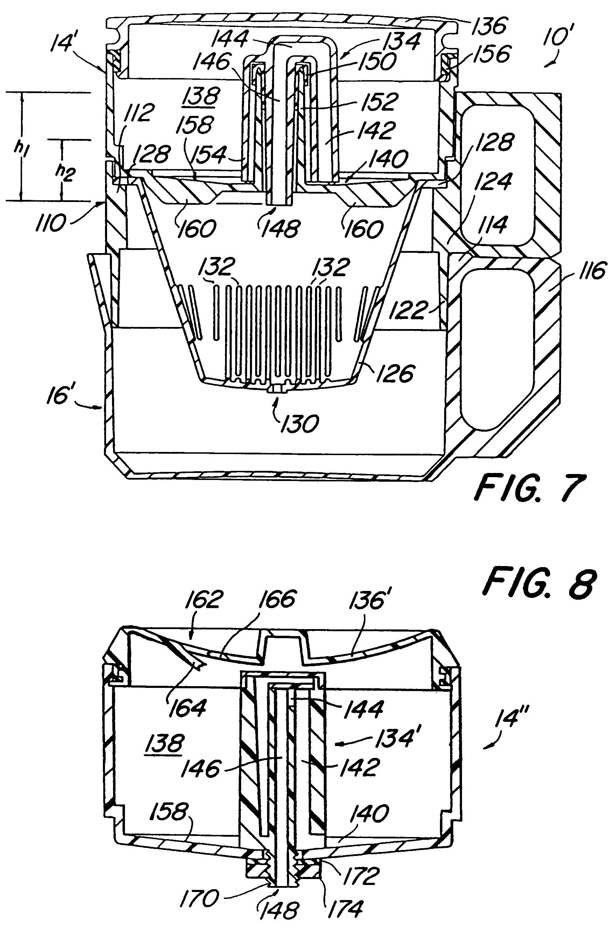

In Figures 7-9 there is shown a second embodiment of the present invention. This second embodiment 10′ also comprises a reservoir portion 14′, a carafe 16′ and a coffee basket 110. The reservoir 14′ is supported on the upper rim 112 of the coffee basket 110. Basket 110 is positioned on the rim 114 of the carafe 16′ with portions extending into its interior.

The carafe 16′ includes a handle 116 which is integrally formed as part of the side walls thereof. The handle 116 may also be secured to the carafe 16′ by a screw which is engaged within a band wrapped around the side walls similar to that shown in Figure 2. The method of attachment may be supplemented by having the top portion of the handle hook over the rim of the carafe (not shown). A clamping mechanism (not shown) may also be used.

Coffee basket 110 is positioned below reservoir 14′. Coffee basket 110 includes vertical side walls 122 which rest at shoulder 124 on the upper rim 114 of carafe 16′. The upper end of side walls 122 form rim 112 which in turn support reservoir 14′. The coffee basket 110 includes a well 126 for retaining coffee grounds. Well 126 may be supported within the side walls 122 by flange 128. Well 126 preferably includes a frusto-conical shape with the large end being open upwardly. The tapered well 126 preferably has an elliptical cross section. The basket 110 is contemplated to permit the passage of heated water through the coffee grounds to outlet 130 in the bottom of the well 126. On the interior surfaces of the well 126 is provided a series of upstanding ribs 132 which act as a channeling means for the water toward outlet 130. A filter (not shown) may be used to retain the coffee grounds within well 126 during brewing. Ribs 132 support the filter away form the inside surface of the well 126 and permit coffee to flow from all surfaces of the filter toward the outlet 130.

Within the interior of the reservoir 14′is provided a water transfer tube 134. A lid 136 is provided on the reservoir 14′ to form a sealed internal chamber 138. Transfer tube 134 generally includes an inlet 140, an inlet leg 142, a bight 144, an outlet leg 146, and an outlet 148. The transfer tube 134 in this second embodiment is generally contemplated to be removable from the reservoir 14′. A seal 150 is provided on an upstanding projection 152 positioned within the reservoir 14′. The outside surfaces of the outlet leg 146 engages the seal 150 to prevent the passage of air into or out of the chamber 138. A skirt 154 is provided to assist in securing the transfer tube 134 to the projection 152 and seal 150. The rim of the lid 136 is also provided with a seal 156. Seal 156 engages the inside surfaces of the top of the reservoir 14′. Thus, the chamber 138 formed by the lid 136 and reservoir 14′ is completely sealed from ambient air upon closing the lid 136. The seal 156 for the lid 136 and the seal 150 for the transfer tube 134 are each contemplated to be a formed single piece of silicon rubber material.

The outlet 148 of transfer tube 134 is positioned below the inlet 140 and the bottom surface 158 of the reservoir 14′. Water passing through outlet 148 of the transfer tube 134 will be directed into the well 126 and onto the coffee grounds retained therein. The basket 16′ may include means (not shown) for restricting the water flow onto the coffee grounds within the well 40, such as a perforated lid. The diameter of the bore formed by the inlet leg 142, bight 144 and outlet leg 146 is contemplated to have a substantially constant cross-section or bore. Bight 144 is positioned within the chamber 138 above the upper rim of the reservoir 14′. Thus, even if the water within the reservoir 14′ is filled to the top, the bight 144 will project above the water level.

Reservoir 14′ is provided with projecting feet 160 which support the reservoir 14′ when placed on a counter surface after disassembling the apparatus 14′. The feet 160 are contemplated to project below the bottom 158 of the reservoir 12′ a greater distance than the projection of the outlet 148 of transfer tube 134.

The operation of the apparatus 10′ is generally contemplated to be as follows. Upon exposure of the microwave energy to the apparatus 10′, the water within the reservoir 14′ is heated and the brewing cycle is initiated. The heating of the water initiates a pumping system by increasing the pressure within the sealed chamber 138 of the reservoir 14′. The seal of the lid 136 to the reservoir body is preferably sufficient to withstand the contemplated pressure variation within the reservoir chamber during brewing. The increase in pressure forces water into inlet 140 of the transfer tube 134 and upwardly through inlet leg 142. Upon reaching the bight 144, the water begins to flow over into the outlet leg 146. Because the outlet 62 of the transfer tube 134 is positioned below the water line within the reservoir 14′ and below the inlet 140, a hydraulic head advantage occurs. This hydraulic head advantage causes a substantially continuous flow of water from the reservoir 14′, through the U-shaped passageway of the transfer tube 134 and onto the coffee grounds within the well 126 of the coffee basket 110. The advantage transfers water from the reservoir chamber and through the transfer tube 134, until the level within the reservoir falls below inlet 140. Upon reaching this level, air enters the inlet leg 142 and breaks the advantage.

It is contemplated that the creation of the hydraulic head advantage causes a substantially continuous flow of water, and that further pressure build-up within the reservoir 14′ is not necessarily required. The change in pressure caused by the heating of the water within the sealed reservoir chamber 138 (if remaining sealed) is contemplated to fluctuate over the heating cycle due to the transfer of water volume through the transfer tube and the continuous heating of the water by the microwave energy. However, the flow rate of the water through the tube 134 caused by the hydraulic head advantage is contemplated to be substantially faster than that caused by the periodic pressure increase alone, as in the embodiment shown in Figures 1-6. This relatively faster flow rate is considered advantageous, since the temperature of the water deposited onto the coffee grounds over the brewing cycle will remain relatively low as compared to a transfer technique that relies on continuous heating or boiling of the water to cause further water transfer. Thus, the coffee grounds will not be scalded by exposure to over-heated water, which would normally create bitterness within the brewed coffee.

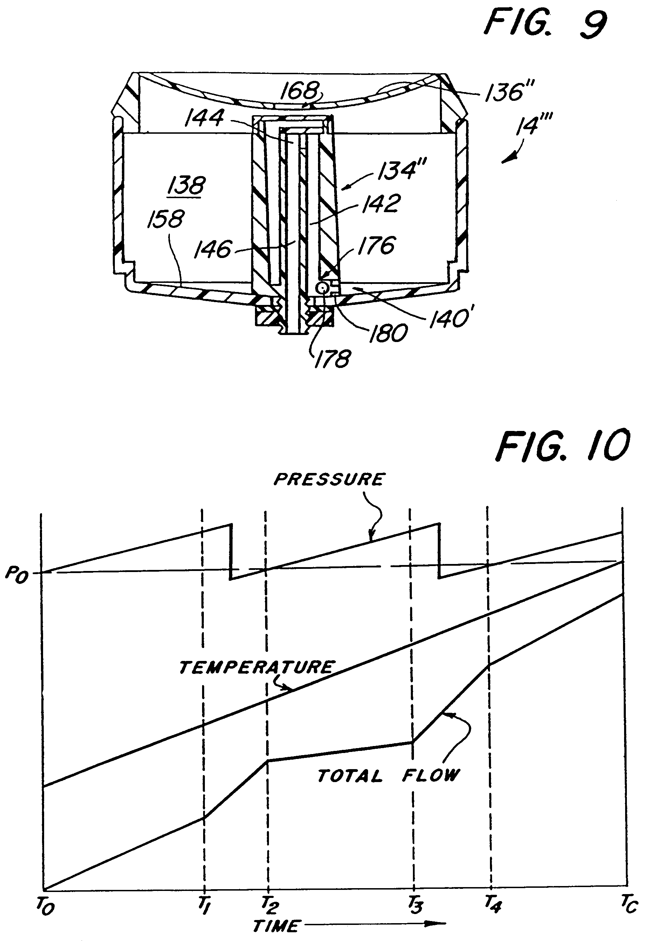

Figure 10 is a schematic representation of the relationship of the pressure within the chamber 138, the temperature of the water retained therein and the total flow of the water from the reservoir 14′. When water is filled within the reservoir 14′, the placement of the lid 136 on top creates an initial pressurization of the chamber 138. This initial pressurization serves to prime the transfer tube 134, causing the water to flow upwardly through the inlet leg 142 and over the bight 144. The water expelled through the outlet 148, upon this initial pressurization, is discharged into the coffee basket 110, pre-wetting the coffee grounds. It is contemplated that the pressure within the chamber 138 will be slightly greater than ambient pressure due to the rebalancing of the water level within the transfer tube 134 and the reservoir 14′.

The initial pressure P₀ within the chamber 138 is defined on the graph in Figure 10. The starting time T₀ for the brewing cycle is the initiation of the microwave energy from the microwave oven. The microwave energy immediately begins to increase the water temperature within the reservoir 14′. This increase in temperature of the water over the brewing cycle is substantially linear. The increase in temperature causes an increase in the pressure within the chamber 138. Because of the priming of the transfer tube 134, the pumping system for the water is initiated substantially immediately upon application of the microwave energy.

The flow of water caused by the increase in pressure during this initial time period T₁ is substantially constant. At a certain point in time the flow rate fills the bight 144 in the transfer tube 134 and the hydraulic head advantage is initiated. This advantage causes a substantial increase in the flow rate of the water from the reservoir 14′ through the transfer tube 134. This increased flow rate causes a drop in pressure within the chamber 138 due to the substantial reduction in water volume therein without a corresponding increase in pressure due to a rise in water temperature. The pressure is contemplated to become substantially negative, or below the initial pressure P₀. This negative pressure causes a restriction on the flow of the hydraulic head advantage. This restricted flow is seen during the period between times T₂ and T₃.

It is contemplated that the brewing cycle will further include a second pressure increase with the hydraulic head advantage again taking precedent over the pumping system. A sudden increase in flow occurs at about time T₃. During the time period between T₃ and T₄ there is a second substantial reduction in the pressure within the chamber 138. However, the higher water temperature likely restores the vapor pressure at a faster rate, causing a faster flow between the period between times T₄ and T_{c} than during the period T₂ through T₃. Upon completion of the brewing cycle, substantially all of the water flows through the transfer tube 134 into the well 126 of the coffee basket 110.

Illustrated in Figure 8 is an alternate version of the reservoir 14˝. This alternate reservoir 14˝, although varying slightly in form from that shown in Figure 7, is substantially the same as that previously described. Reservoir 14˝, however, includes a pressure relief means 162 for breaking the seal of the reservoir chamber 138 after initiation of the flow of water through the transfer tube 134′. It is possible that the flow of water from the sealed reservoir 14˝, due to the hydraulic head advantage, will create a pressure differential within the reservoir chamber that would counter the flow of water through the transfer tube 134′. This pressure differential would be caused by the flow of water through tube 134′ at a faster rate than the increase in pressure created by further elevation of the water temperature caused by the microwave energy. Means 162 may take the form of a hinged flap 164 which is attached to the lid 136′ of the reservoir 14˝. The flap 164 is formed normally open. Thus, the chamber 138 is normally in an unsealed condition. When lid 136′ is placed onto the reservoir 14˝, the flap 164 is snapped onto its seat 166 to form the seal. The engagement between flap 164 and seat 166 on lid 136′ is contemplated to be such that the flap 164 will release at a given pressure differential within the chamber 138. This release preferably occurs after the initiation of the hydraulic head advantage at a negative pressure within the chamber 138. The provision of the pressure relief means 162 is contemplated to create a flow rate, from the reservoir 14˝ into the coffee basket 110, that is constant throughout the brewing cycle. In the alternative, the pressure release means 162 may also release at the build-up of too great a pressure in the chamber 138. In this second condition, the flap 164 would be forced outwardly, opposite that shown in Figure 8.

Within this alternate version of the reservoir 14˝ (as well as that shown in Figure 9 and identified by the numeral 14′) is shown a transfer tube 134′ having a variation in structure from that illustrated in Figure 7. The transfer tube 134′ is supported on the reservoir bottom 158 and projects upwardly to a position closely adjacent to the lid 136′. Transfer tube 134′ includes an inlet 140 which is positioned closely adjacent the interior surface of bottom 158. Tube 134′ is attached to the reservoir bottom by having its base 170 including a threaded projection which is inserted through an opening in the center of the reservoir bottom 158. Tube 134′ is locked and sealed to the bottom 158 by washer 172 and nut 174. The channel formed by the transfer tube 134 includes the same elements as that found in Figure 7. The inlet leg 142 rises to a bite 144 closely adjacent to the top surface of the reservoir chamber 138. An outlet leg 146 extends from the bite 144 to an outlet 148 positioned at the end of base 170. Again, the transfer tube 134′ is contemplated to include a substantially constant bore.

Another alternative version of the reservoir structure 14‴ is illustrated in Figure 9. In this version, the reservoir chamber 138 formed by the lid 136˝ and the reservoir body 14‴ need not be sealed. An opening 168 is provided in lid 136˝ and may be formed as an inlet for introducing water into the chamber 138‴. The inlet 140′ to transfer tube 134′ includes a check valve 176. Valve 176 includes a ball 178 retained in passageway 180 at the inlet 140′. The value 176 is formed to prevent the back-flow of water from the inlet leg 142. The transfer tube 134′ is preferably positioned closely adjacent the side walls of the reservoir body 14‴. When water is filled into the reservoir 14‴, the level will balance in the chamber and the inlet leg 142 of the transfer tube 134′. Upon exposure to microwave energy, the water in both the chamber 138 and the inlet leg 142′ will heat and expand. The water in leg 142′ preferably heats at a greater rate due to its lower mass as compared to that in the chamber 138. Ball 178 will seat at the end of passageway 180 to prevent the column of water in the inlet leg 142 from returning back into the reservoir 14‴. Thus, the expansion of the heated water within inlet leg 142 will rise to the top of the bight 144 and flow over into outlet leg 146, creating the hydraulic head advantage. Again, the flow of water due to the advantage is contemplated to be continuous and will not require further increase in the temperature of the water for the pumping system to continue. Further, the flow from the reservoir 14‴ will be substantially unaffected by pressure variations within the chamber 138.

Figure 10 is representative of the observed operation of an apparatus 10′ made in accordance with the present invention. The number of pressure cycles during any brew may vary according to the water temperature, the quantity of water within the chamber, the diameter of the bore of the transfer tube, the wattage of the microwave oven and other factors. The slope and positioning of the curves illustrated are not limiting. The fluctuation in flow rate over the brewing cycle as shown in figure 10 will substantially assist the coffee preparation in a number ways. A drip brewing method requires a certain residence time for the water to be in contact with the coffee grounds. Further, the amount of water input into the basket during any particular time is desired to be controlled. Variations in structure of the reservoir and transfer tube will also change the results obtained from the application of microwave energy. The curve would change upon the application of the pressure release means 162. Further, the ball check valve 176 would operate without any pressure variations in the reservoir, i.e., with the system remaining at ambient pressure.

The transfer of water from the reservoir into the coffee basket is defined by the term "hydraulic head advantage". The pumping system of the brewing apparatus of the present invention creates this hydraulic head advantage by means of the transfer tube and its internal structures. The tube as shown includes a substantially U-shaped passageway having a constant bore through which water can be moved from a higher to a lower level in a substantially continuous manner. The pumping system in the present invention is created by means of heating the water via the microwave energy. The variations of the embodiment of the brewing apparatus 10 and 10′ creates a pumping of the water by the internal pressure within the chamber defined by the lid and the reservoir, as well as the static pressure of the water within the reservoir. These pressures force the liquid up the inlet leg and over the bight of the transfer tube. The creation of a hydraulic head advantage relies on a continuous flow filling the bight and the longer outlet leg of the transfer tube, the weight of the water within the outlet leg, which is longer than the inlet leg, creates a continuous downward pressure and a corresponding downward flow.

In the embodiment shown in Figure 9, it is the relationship between the heating and expansion of the water molecules within the inlet leg, in combination with the weight of the water within the reservoir, which causes the upward movement of the water in the inlet leg. The ball check valve 176 prevents the flow of water returning into the reservoir chamber 138.

The pumping system in the present invention that initiates the hydraulic head advantage by the application of the microwave energy and the pressure forcing the water through the transfer tube is initially created at the inlet end of the transfer tube. A continuous flow of water is created without there being a suction or lowering of the pressure in the transfer tube at the outlet end or water rising above the top of the bight on the inlet side, as would generally be contemplated by a siphon type tubing arrangement. The hydraulic head advantage has a significant effect in the overall effectiveness of the presently contemplated invention.

The potential energy created by the water level within the reservoir contributes to the flow rate of the hydraulic head advantage. As illustrated in Figure 7, if the reservoir were filled with a water at a level h₁, the potential energy of this water level is measured against the outlet 148 of the transfer tube 134. A higher water level h₂ has a greater potential energy and will cause a greater flow rate. The change in potential energy over the brewing cycle is factored into the pressure and total flow curves represented in Figure 10.

The priming of the transfer tube 134 as well as the creation of the hydraulic head advantage is also a contributing factor in the brewing of a better cup of coffee. The temperature of the water over the brewing cycle within the present invention is contemplated to be relatively lower than that required by an apparatus which relies solely upon the vapor pressure or boiling for the transfer of water. The initial wetting of the coffee grounds by the water prior to the application of microwave energy thereon, also begins the extraction process prior to the flow of heated water. The flow due to the hydraulic head advantage is initiated at a lower water temperature and is completed at a faster rate. The relatively cooler overall water temperature and the speed at which the brewing cycle is completed, greatly contributes to the coffee extraction and the prevention of the introduction of bitter oils into the brewed coffee.

Upon initiation of the flow over the bight of the transfer tube and the creation of the hydraulic head advantage, the flow rate will be substantially controlled by the diameter of the passageway within the transfer tube. This flow rate must be balanced to produced the desired brewing time and brewing temperature. The parameters of this balance include the consistency of the coffee and the effect of the microwave energy on the coffee grounds. Other factors should be apparent to those skilled in the brewing art upon review of the disclosure herein.

## Claims

1. A beverage brewing apparatus for use within a microwave oven, comprising a reservoir (14; 138) for retaining a quantity of water to be heated, means (30; 110) for retaining a quantity of material from which the beverage is to be brewed, a container (16, 16') for receiving the brewed beverage, and water transfer means (40; 134; 134'; 134'') having an inlet end within the reservoir and an outlet end (54; 148), said material retaining means (30; 110) being located below the outlet end of the water transfer means to receive heated water therefrom,
characterised in that the reservoir (14; 138) is transparent to microwave energy whereby water in the reservoir can be heated, and in that the transfer means functions, in response to the application of microwave energy to the water, to pump water by pressure increase from the reservoir to the outlet end and/or to create a hydraulic head advantage between the reservoir and the outlet end of the transfer means.

2. An apparatus as claimed in claim 1, characterised in that the reservoir has a tubular shaped body (20) including an opening (24) through the centre thereof, and the outlet end (54) of the transfer means discharges heated water through the opening (24) in the reservoir body, towards the retaining means (30), and through a spreader plate (58) positioned within the body opening, the spreader plate being arranged to restrict fluid flow towards the retaining means.

3. An apparatus as claimed in claim 1 or 2, characterised in that the transfer means (40) is releasably secured to the reservoir (14) within an opening in the top surface thereof, and gasket means (46) seals the opening into the reservoir.

4. An apparatus as claimed in any preceding claim, characterised in that the transfer means defines a substantially U-shaped passageway, the transfer means being positioned within a sealed chamber formed by the reservoir, and the bight of the U-shaped passageway being positioned at a level above the maximum water line within the reservoir.

5. An apparatus as claimed in any preceding claim, characterised in that the container comprises a carafe (16; 16') adapted to support a basket (30; 110), the basket being adapted to retain a quantity of coffee grounds therein, and the carafe being adapted to receive brewed coffee discharged from the outlet of the basket.

6. An apparatus as claimed in claim 5, characterised in that the reservoir, the basket and the carafe interengage with one another in a substantially vertical alignment.

7. An apparatus as claimed in any preceding claim, characterised in that there is a substantially continuous flow of water from the reservoir through the transfer means and the rate of this flow varies over time until completion of the transfer of substantially all water retained within the reservoir.

8. An apparatus as claimed in any of claims 1 to 6, characterised in that the flow of water from the reservoir through the transfer means is an intermittent flow.

9. An apparatus as claimed in any preceding claim, characterised in that the attachment of the transfer means to the reservoir seals the reservoir chamber from ambient air pressure.

10. An apparatus as claimed in any of claims 1 to 8, characterised in that the reservoir is sealed from ambient air pressure by a closure lid (136).

11. An apparatus as claimed in any preceding claim, characterised in that the transfer means includes a valve means (178) positioned at the inlet, the valve means being adapted to prevent reverse flow of water from the transfer means into the reservoir (138).

12. An apparatus as claimed in any of claims 1 to 8, characterised in that means are provided to seal the quantity of water within the reservoir, said sealing means being adapted automatically to release the seal after initiation of a hydraulic head advantage through the transfer means.

13. An apparatus as claimed in claim 1, characterised in that the transfer means has a substantially constant bore between the inlet end and the outlet end.

## Patentansprüche

1. Getränke-Zubereitungsgerät zur Verwendung in einem Mikrowellenherd mit einem Vorratsbehälter (14; 138) zum Aufnehmen einer zu erhitzenden Wassermenge, einem Mittel (30; 110) zum Aufnehmen einer Materialmenge, aus der das Getränk zuzubereiten ist, einem Behälter zum Aufnehmen des zubereiteten Getränkes und einem Wasserüberleitungsmittel (40; 134; 134'; 134''), das ein Zulaufende innerhalb des Vorratsbehälters und ein Auslaufende (54; 148) aufweist, wobei das Mittel zum Aufnehmen des Materials (30; 110) unterhalb des Auslaufendes des Wasserüberleitungsmittels angeordnet ist, um von diesem erhitzes Wasser zu erhalten,
dadurch gekennzeichnet, daß der Vorratsbehälter (14; 138) für Mikrowellenenergie durchlässig ist, wodurch Wasser im Vorratsbehälter erhitzt werden kann, und das Überleitungsmittel als Reaktion auf die Anwendung der Mikrowellenenergie auf das Wasser bewirkt, daß Wasser durch Druckerhöhung vom Vorratsbehälter zum Auslaufende gepumpt wird und/oder ein hydraulischer Druckhöhen-Effekt zwischen Vorratsbehälter und dem Auslaufende des Überleitungsmittels verursacht wird.

2. Gerät nach Anspruch 1, dadurch gekennzeichnet, daß der Vorratsbehälter einen rohrförmiger Körper (20) mit einer durchgehenden zentralen Öffnung (24) aufweist und das Auslaufende (54) des Überleitungsmittels durch die Öffnung (24) im Vorratsbehälter-Körper erhitztes Wasser in Richtung auf das Mittel zum Aufnehmen und durch eine Verteilerplatte abgibt, die innerhalb der Öffnung im Körper angeordnet ist, wobei die Verteilerplatte so eingerichtet ist, daß das Fließen der Flüssigkeit in Richtung auf das Mittel zum Aufnehmen eingeschränkt wird.

3. Gerät nach Anspruch 1 oder 2, dadurch gekennzeichnet, daß das Überleitungsmittel (40) lösbar am Vorratsbehälter (14) innerhalb einer Öffnung an der oberen Oberfläche desselben angebracht ist und ein Dichtungsmittel (46) die Öffnung in den Vorratsbehälter verschließt.

4. Gerät nach einem der vorhergehenden Ansprüche, dadurch gekennzeichnet, daß das Überleitungsmittel einen im wesentlichen U-förmigen Durchgang definiert und innerhalb einer durch den Vorratsbehälter gebildeten geschlossenen Kammer angeordnet und die Krümmung des U-förmigen Durchgangs in einer Höhe oberhalb des höchsten Wasserstandes innerhalb des Vorratsbehälters angeordnet ist.

5. Gerät nach einem der vorhergehenden Ansprüche, dadurch gekennzeichnet, daß der Behälter eine zum Halten eines Korbes (30; 110) geeignete Kanne (16; 16') aufweist und der Korb zum Aufnehmen einer Menge Kaffeemehl dient und die Kanne zur Aufnahme des durch die Auslaßöffnung des Korbes austretenden zubereiteten Kaffees bestimmt ist.

6. Gerät nach Anspruch 5, dadurch gekennzeichnet, daß der Vorratsbehälter, der Korb und die Kanne in einer im wesentlichen vertikalen Anordnung miteinander in Eingriff sind.

7. Gerät nach einem der vorhergehenden Ansprüche, gekennzeichnet durch einen im wesentlichen kontinuierlichen Wasserfluß vom Vorratsbehälter durch das Überleitungsmittel, wobei die Fließgeschwindigkeit über die Zeit variiert, bis die Überleitung von im wesentlichen des ganzen im Vorratsbehälter befindlichen Wassers vollständig erfolgt ist.

8. Gerät nach einem der Ansprüche 1 - 6, dadurch gekennzeichnet, daß der Wasserfluß vom Vorratsbehäler durch das Überleitungsmittel ein intermittierender Fluß ist.

9. Gerät nach einem der vorhergehenden Ansprüche, dadurch gekennzeichnet, daß die Anbringung des Überleitungsmittels am Vorratsbehälter die Vorratsbehälterkammer gegenüber dem umgebenden Luftdruck abschließt.

10. Gerät nach einem der Ansprüche 1 - 8, dadurch gekennzeichnet, daß der Vorratsbehälter durch einen Verschlußdeckel (136) gegenüber dem umgebendem Luftdruck abgeschlossen ist.

11. Gerät nach einem der vorhergehenden Ansprüche, dadurch gekennzeichnet, daß das Überleitungsmittel ein im Zulauf angeordnetes Ventilmittel (178) aufweist, um ein Zurückfließen des Wassers vom Überleitungsmittel in den Vorratsbehälter (138) zu verhindern.

12. Gerät nach einem der Ansprüche 1 - 8, dadurch gekennzeichnet, daß Mittel zum Einschließen der Wassermenge innerhalb des Vorratsbehälters vorgesehen und diese Mittel zum Einschließen so ausgebildet sind, daß sie das Einschließen nach Einleiten eines hydraulischen Druckhöhen-Effektes durch das Überleitungsmittel automatisch aufheben.

13. Gerät nach Anspruch 1, dadurch gekennzeichnet, daß das Überleitungsmittel einen im wesentlichen konstanten Querschnitt zwischen Zulaufende und Auslaufende aufweist.

## Revendications

1. Appareil d'infusion de boisson destiné à être utilisé à l'intérieur d'un four à micro-ondes, comprenant un réservoir (14 ; 138) pour conserver une certaine quantité d'eau à faire chauffer, des dispositifs (30 ; 110) pour conserver une certaine quantité d'un matériau à partir duquel la boisson doit être infusée, un récipient (16, 16') destiné à recevoir la boisson infusée, et des dispositifs de transfert d'eau (40 ; 134 ; 134'; 134'') comportant une extrémité d'entrée à l'intérieur du réservoir et une extrémité de sortie (54 ; 148), les dispositifs conservant le matériau (30 ; 110) étant placés au-dessous de l'extrémité de sortie de transfert d'eau pour recevoir l'eau chauffée de ceux-ci,
caractérisé en ce que le réservoir (14 ; 138) est transparent à l'énergie micro-ondes de façon que l'eau contenue dans le réservoir puisse être chauffée, et en ce que les dispositifs de transfert fonctionnent, en réponse à l'application à l'eau de l'énergie micro-ondes, pour pomper l'eau du réservoir par augmentation de pression vers l'extrémité de sortie, et/ou pour créer un supplément de pression hydraulique entre le réservoir et l'extrémité de sortie des dispositifs de transfert.

2. Appareil selon la revendication 1, caractérisé en ce que le réservoir comporte un corps de forme tubulaire (20) comprenant une ouverture (24) à travers son centre, et en ce que l'extrémité de sortie (54) des dispositifs de transfert déchargent l'eau chauffée, à travers l'ouverture (24), dans le corps de réservoir, vers les dispositifs (30) conservant le matériau, et à travers une plaque d'arrosage (58) placée à l'intérieur de l'ouverture du corps, cette plaque d'arrosage étant disposée pour limiter le débit de fluide vers les dispositifs (30) conservant le matériau.

3. Appareil selon la revendication 1 ou 2, caractérisé en ce que les dispositifs de transfert (40) sont fixés de manière amovible au réservoir (14) à l'intérieur d'une ouverture formée dans sa surface supérieure, et en ce qu'un joint d'étanchéité (46) ferme de manière étanche l'ouverture du réservoir.

4. Appareil selon l'une quelconque des revendications précédentes, caractérisé en ce que les dispositifs de transfert définissent un passage essentiellement en forme de U, ces dispositifs de transfert étant placés à l'intérieur d'une chambre étanche formée par le réservoir, et l'anse du passage en forme de U étant placée à un niveau situé au-dessus du niveau d'eau maximum à l'intérieur du réservoir.

5. Appareil selon l'une quelconque des revendications précédentes, caractérisé en ce que le récipient comprend une carafe (16 ; 16') destinée à supporter un panier (30 ; 110), ce panier étant destiné à contenir dans celui-ci une certaine quantité de café moulu, et la carafe étant destinée à recevoir le café infusé déchargé par l'ouverture de sortie du panier.

6. Appareil selon la revendication 5, caractérisé en ce que le réservoir, le panier et la carafe sont emboîtés les uns dans les autres dans un alignement essentiellement vertical.

7. Appareil selon l'une quelconque des revendications précédentes, caractérisé en ce qu'il existe un débit d'eau essentiellement continu partant du réservoir et passant par les dispositifs de transfert, la vitesse de ce débit variant au cours du temps jusqu'à la fin du transfert d'essentiellement toute l'eau conservée à l'intérieur du réservoir.

8. Appareil selon l'une quelconque des revendications 1 à 6, caractérisé en ce que le débit d'eau partant du réservoir et passant par les dispositifs de transfert, est un débit intermittent.

9. Appareil selon l'une quelconque des revendications précédentes, caractérisé en ce que la fixation des dispositifs de transfert au réservoir assure l'étanchéité de la chambre du réservoir par rapport à la pression d'air ambiante.

10. Appareil selon l'une quelconque des revendications 1 à 8, caractérisé en ce que le réservoir est fermé de manière étanche par rapport à la pression d'air ambiante, au moyen d'un couvercle de fermeture (136).

11. Appareil selon l'une quelconque des revendications précédentes, caractérisé en ce que les dispositifs de transfert comprennent une soupape (178) placée à l'endroit de l'ouverture d'entrée, cette soupape étant destinée à empêcher un retour inverse de l'eau des dispositifs de transfert vers le réservoir (138).

12. Appareil selon l'une quelconque des revendications 1 à 8, caractérisé en ce que des dispositifs sont prévus pour assurer l'étanchéité de la quantité d'eau conservée dans le réservoir, ces dispositifs d'étanchéité étant conçus pour libérer automatiquement l'étanchéité après déclenchement d'une pression hydraulique à travers les dispositifs de transfert.

13. Appareil selon la revendication 1, caractérisé en ce que les dispositifs de transfert présentent un alésage essentiellement constant entre l'extrémité d'entrée et l'extrémité de sortie.
